# EUROPEAN PATENT APPLICATION

(11) **EP 3 691 366 A1**
(43) Date of publication of application: **05.08.2020**
(21) Application number: 17926833.9
(22) Date of filing: 29.09.2017
(51) Int. Cl.: H04W 72/04, H04W 28/06, H04W 72/12

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); MU, Qin, Beijing 100190 (CN)
(74) Representative: Hoffmann Eitle
(86) International application number: PCT/JP2017/035666
(87) International publication number: WO 2019/064551

(57) **Abstract**

An aspect of a user terminal of the present invention includes a receiving section that receives a downlink control channel transmitted by using a resource unit group including one or more resource units in a control resource set, and a control section that controls first interleaving using a given number of resource units as a first interleaving range and the resource unit group as a first interleaving unit, and second interleaving using the entire of the control resource set as a second interleaving range and a given number of resource units as a second interleaving unit.

## Description

### Technical Field

The present invention relates to a user terminal and a radio communication method in next-generation mobile communication systems.

### Background Art

For the Universal Mobile Telecommunications System (UMTS) networks, the specifications of Long Term Evolution (LTE) have been drafted for the purpose of further increasing high speed data rates, providing lower latency, and so on (see Non-Patent Literature 1). For the purpose of achieving further broadbandization and increased speed beyond LTE (also referred to as "LTE Rel. 8" or "LTE Rel. 9"), the specifications of LTE-A (also referred to as "LTE advanced," "LTE Rel. 10, "LTE Rel. 11," or "LTE Rel. 12") have been drafted, and successor systems of LTE (referred to as, for example, "Future Radio Access (FRA)," "5th generation mobile communication system (5G)," "5G+ (plus)," "New Radio (NR)," "New radio access (NX)," "Future generation radio access (FX)," "LTE Rel. 13," "LTE Rel. 14," "LTE Rel. 15 (or later versions)," and so on) are also under study.

In the existing LTE systems (for example, LTE Rel. 8 to Rel. 13), communication of a downlink (DL) and/or an uplink (UL) is performed by using a subframe of 1 ms (also referred to as a "transmission time interval (TTI)" and the like). The subframe is a transmission time unit of one data packet coded by channel coding, and is a processing unit of scheduling, link adaptation, retransmission control (Hybrid Automatic Repeat reQuest (HARQ)), and so on.

A radio base station controls allocation (scheduling) of data for a user terminal, and notifies the user terminal of the scheduling of the data by using downlink control information (DCI). The user terminal monitors resource candidates for a downlink control channel (for example, a Physical Downlink Control Channel (PDCCH)) to detect the DCI, and thereby controls reception of DL data and/or transmission of uplink data, based on the DCI.

In existing LTE systems, transmission of a downlink control channel (PDCCH) is controlled by using aggregation of one or a plurality of control channel elements (CCEs). Each CCE is constituted of a plurality of resource element groups (REGs). Each REG is also used in a case of mapping control channels for resource elements (REs).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR and 5G), it is studied to monitor (perform blind decoding on) a given frequency domain and time domain (for example, a control resource set (CORESET)) configured for one or each of a plurality of user terminals to receive (detect) DCI. In the future radio communication systems, it is assumed that a plurality of CORESETs having different numbers of symbols and having frequency resources at least part of which is shared are configured in a given time unit (for example, a slot).

For future radio communication systems, it is studied to use, for a downlink control channel, a different configuration from those of existing LTE systems. For example, it is studied to define a group (REG bundle) including one or more REGs and to control communication (for example, transmission/reception processes and the like) by using at least the REG bundle. In such a case of employing a different configuration from those of existing LTE systems to perform transmission/reception of a downlink control channel, it is difficult to employ a control technique (for example, a transmission/reception method) of the existing LTE systems without any change.

The present invention has been made in view of above and has one object to provide a user terminal and a radio communication method with which it is possible, in a case of employing a different configuration from those of existing LTE systems to perform communication, to appropriately perform communication of a downlink control channel.

### Solution to Problem

A user terminal according to an aspect of the present invention includes a receiving section that receives a downlink control channel transmitted by using a resource unit group including one or more resource units in a control resource set, and a control section that controls first interleaving using a given number of resource units as a first interleaving range and the resource unit group as a first interleaving unit, and second interleaving using the entire of the control resource set as a second interleaving range and a given number of resource units as a second interleaving unit.

### Advantageous Effects of Invention

According to the present invention, it is possible, in a case of employing a different configuration from those of existing LTE systems to perform communication, to appropriately perform communication of a downlink control channel.

### Brief Description of Drawings

FIG. 1 is a diagram to show an example of configurations of CORESETs;
FIG. 2A and FIG. 2B are each a diagram to show an example of a REG bundle;
FIG. 3 is a diagram to show an example of two-step interleaving;
FIGS. 4A and 4B are each a diagram to show an example of two-step interleaving in a 1-symbol CORESET according to the present embodiment;
FIG. 5 is a diagram to show an example of two-step interleaving in a 2-symbol CORESET according to the present embodiment;
FIG. 6 is a diagram to show an example of two-step interleaving in a 3-symbol CORESET according to the present embodiment;
FIG. 7 is a diagram to show an example of a schematic structure of a radio communication system according to the present embodiment;
FIG. 8 is a diagram to show an example of an overall structure of a radio base station according to the present embodiment;
FIG. 9 is a diagram to show an example of a functional structure of the radio base station according to the present embodiment;
FIG. 10 is a diagram to show an example of an overall structure of a user terminal according to the present embodiment;
FIG. 11 is a diagram to show an example of a functional structure of the user terminal according to the present embodiment; and
FIG. 12 is a diagram to show an example of a hardware structure of the radio base station and the user terminal according to the present embodiment.

### Description of Embodiments

For future radio communication systems (for example, 5G, NR, or the like), it is studied that a given frequency domain and time domain are dynamically and/or semi-statically configured for a user terminal (User Equipment (UE)) and the user terminal monitors (blind-decodes) DCI in at least part of the given frequency domain and time domain.

Each of the given frequency domain and time domain is also referred to as a "control resource set (CORESET)," a "control subband," a "search space set," a "search space resource set," a "control region," a "control subband," an "NR-PDCCH region," and the like, for example.

A frequency domain constituting a CORESET may be at least part of a carrier (also referred to as a "component carrier (CC)," a "system bandwidth," a "carrier bandwidth," and the like) or a partial band (a bandwidth part (BWP)) configured in the carrier.

For example, a frequency domain constituting a CORESET may be one or a plurality of resource blocks (RBs) (also referred to as "physical resource blocks (PRBs)" and the like). An RB is a frequency resource unit constituted of a given number of subcarriers (for example, 12 subcarriers). A CORESET can be constituted of a plurality of RBs that are contiguous and/or non-contiguous in the frequency direction.

A time domain constituting a CORESET may have a given number of symbols (for example, one to three symbols). Note that a plurality of CORESETs having different numbers of symbols and having PRBs at least partially overlapping may be configured in one slot.

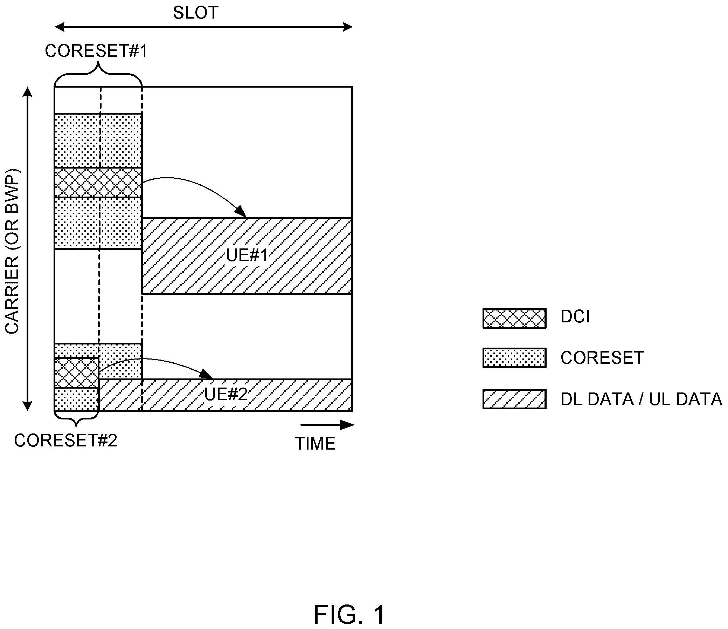

FIG. 1 is a diagram to show an example of a configuration of CORESETs. As shown in FIG. 1, each CORESET is constituted of a given number of non-contiguous RBs in a carrier (or a BWP) and a given number of symbols in a slot. For example, FIG. 1 shows CORESET #1 constituted in two symbols and CORESET #2 constituted of one symbol. Note that CORESETs #1 and #2 are constituted of the same PRB but are not limited thereto.

In FIG. 1, user terminal (UE) #1 monitors a search space in CORESET #1 of two symbols to detect DCI. Meanwhile, user terminal #2 monitors a search space in CORESET #2 of one symbol to detect DCI. By configuring CORESETs having different numbers of symbols for user terminals #1 and #2 in this way, it is possible to increase flexibility in scheduling.

Each of user terminals #1 and #2 controls reception of DL data (also referred to as a "DL data channel (for example, a "Physical Downlink Shared Channel (PDSCH)")) and/or transmission of UL data (a "UL data channel" (also referred to as, for example, a "Physical Uplink Shared Channel (PUSCH)")), based on the detected DCI. Note that DCI used for reception of a PDSCH may be referred to as a "DL assignment" while DCI used for transmission of a PUSCH may be referred to as a "UL grant."

Note that a search space is constituted of a set of one or more candidate resources for a downlink control channel (also referred to as, for example, a "PDCCH," an "NR-PDCCH," and the like). A radio base station maps DCI in one of the candidate resources in the set. The candidate resources are also referred to as "downlink control channel candidates," "PDCCH candidates," or the like.

Each PDCCH candidate is constituted of control resource units (for example, control channel elements (CCEs)) the number of which depends on aggregation level (AL). For example, in a case that AL = 1, each PDCCH candidate is constituted of one CCE. Similarly, each PDCCH candidate is constituted of two CCEs, four CCEs, and eight CCEs for AL = 2, 4, and 8, respectively. Note that the AL is not limited to 1, 2, 4, and 8. The number of PDCCH candidates for blind decoding (the number of BD candidates) may be determined for each AL.

For the future radio communication systems, it is also studied to constitute control resource units (for example, CCEs) constituting each PDCCH candidate, using a given number of resource element groups (REGs) (for example, two, three, or six REGs) (resource units).

Here, one REG (one resource unit) is constituted of a given number of symbols and a given number of RBs (for example, one symbol and one RB). One REG may include a given number of resource elements (REs). One RE may be constituted of a given number of subcarriers and a given number of symbols (for example, one subcarrier and one symbol).

In a case that a REG is constituted of one symbol and one PRB, it is possible to perform a PDCCH reception process (for example, a demodulation process) by using a reference signal (for example, a demodulation reference signal (DMRS)). From a viewpoint for increasing channel estimation accuracy for a PDCCH, it is possible to increase reference signals to be mapped to REs (for example, 12 REs) in one REG, but increasing resources for mapping reference signals results in an increase in overhead. In contrast, insufficient resources for mapping reference signals leads a decrease in channel estimation accuracy and a deterioration in communication quality.

In view of this, it is also studied to constitute a group (REG bundle) including one or more REGs and to perform communication (for example, a reception process such as channel estimation) at least in a unit of the REG bundle. Note that a plurality of REGs constituting a REG bundle may be contiguous in the frequency direction and/or the time direction. A REG bundle may be referred to as a "resource unit group," a "REG group," a "REG bundling," a "Super-REG," and a "sub-CCE."

For example, the radio base station may employ the same precoding process (the same precoder) for the REGs in the same REG bundle. The user terminal may average channel estimation results obtained using the reference signals in the REG bundle, by assuming that the same precoder is employed for the REGs in the same REG bundle, to perform a reception process. Since channel estimation can be performed by using DMRSs in one or more REGs as described above, it is possible to increase channel estimation accuracy for a PDCCH.

The user terminal may naturally perform a reception process by using channel estimation results different among the REGs, without averaging channel estimation results obtained using DMRSs in the REG bundle. Alternatively, the user terminal may average channel estimation results obtained using part of the REGs in the REG bundle, to perform a reception process. Alternatively, the user terminal may average channel estimation results obtained using DMRSs in a plurality of REG bundles, to perform a reception process.

The number of REGs (also referred to as a "bundle size" and the like) constituting a REG bundle may be determined based on whether or not an interleaving process (interleaving) is employed for one or more CCEs (or one or more REGs). For example, in a case that interleaving is not employed, a REG bundle is formed of six REGs constituting one CCE, and the six REGs are mapped contiguously in the frequency direction and/or the time direction. In this case, one or more CCEs constituting one PDCCH candidate may also be mapped contiguously in the frequency direction.

In contrast, in a case that interleaving is employed, it may be configured that a REG bundle is formed by grouping two, three, or six REGs, to perform interleaving in a unit of REG bundle. Interleaving may be performed in a CORESET.

The number of REGs constituting a REG bundle may be selected from among candidates determined based on the number of symbols for a CORESET. For example, in a case of a 1-symbol CORESET, one REG bundle may be constituted of two or six REGs, in a case of a 2-symbol CORESET, one REG bundle may be constituted of two or six REGs, and in a case of a 3-symbol CORESET, one REG bundle may be constituted of three or six REGs.

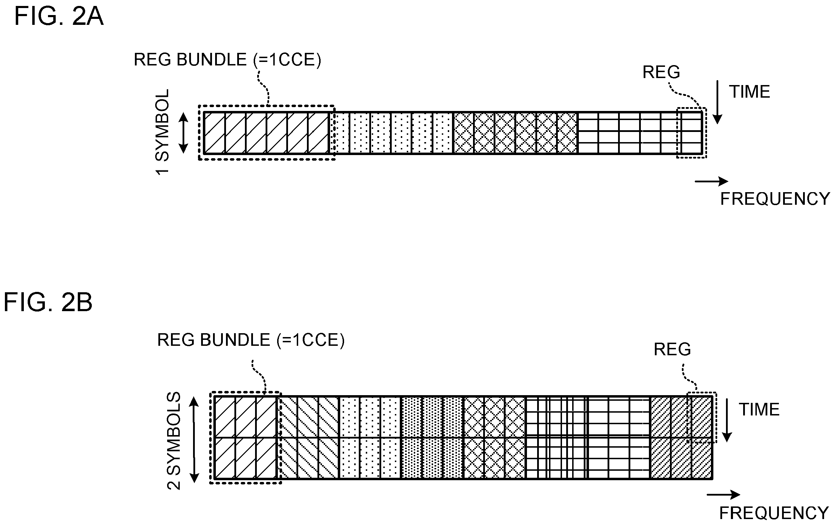

FIGS. 2A and 2B are each a diagram to show an example of a REG bundle. Each of FIGS. 2A and 2B shows a case where one REG bundle is constituted of six REGs in a 1-symbol or 2-symbol CORESET. Note that the number of REGs constituting one REG bundle is not limited to six. In addition, the number of symbols of a CORESET is not limited to one or two.

As shown in FIG. 2A, in a case of the 1-symbol CORESET, a REG bundle may be constituted of a given number of REGs (here, six REGs) that are contiguous in the frequency direction. In a case that interleaving is not employed, all the REGs are mapped in the order shown in FIG. 2A. In a case that interleaving is employed, in contrast, permutation may be performed in a unit of REG bundle in the frequency direction.

As shown in FIG. 2B, in a case of a CORESET of a plurality of symbols, a REG bundle may be constituted of a given number of REGs that are contiguous in the frequency direction and/or the time direction. For example, in FIG. 2B, a 2-symbol CORESET is shown, and a REG bundle is constituted of six REGs in total, which correspond to two REGs in the time direction and three REGs in the frequency direction. In a case that interleaving is not employed, all the REGs are mapped in the order shown in FIG. 2B. In a case that interleaving is employed, in contrast, permutation may be performed in a unit of REG bundle in the frequency direction.

In FIG. 2B, through time-first mapping, REGs may be mapped in the REG group (or the CCE) from REGs that are contiguous in the time direction in the CORESET. Hence, it is possible to substantially increase the number of symbols of the REG group (or the CCE) to be transmitted in the same precoding, and consequently expand the coverage. Note that, although not shown, frequency-first mapping may be employed in FIG. 2B.

It is assumed that one CCE is constituted of one REG bundle in FIG. 2A and FIG. 2B. This makes it possible to use a different precoder (or a different beam) for each CCE (or PDCCH candidate), and hence the radio base station can transmit DCI by using a CCE for which an optimal precoder is used for each user terminal. Note that one CCE may be constituted of two or more REG bundles.

As interleaving methods in a case that a REG bundle is constituted as described above, (1) one-step interleaving (one-step interleaver) for performing permutation in the entire CORESET, (2) two-step interleaving (two-step interleaver) for performing local permutation in a smaller frequency domain (for example, a given number X of REG bundles) than a CORESET and then performing permutation in the entire CORESET, and the like are under study.

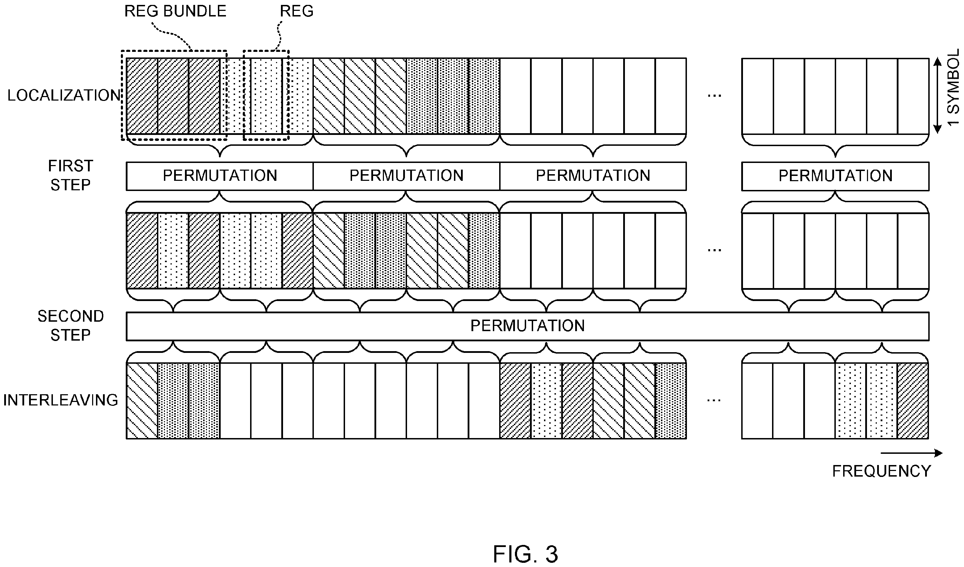

FIG. 3 is a diagram to show an example of two-step interleaving. FIG. 3 shows a case where a CORESET is constituted of one symbol and each REG bundle is constituted of three REGs. First step interleaving is performed using the given number X of REG bundles as an interleaving range and one REG as an interleaving unit. For example, in FIG. 3, X = 2, and permutation is performed in a REG unit within two contiguous REG bundles.

In contrast, second step interleaving is performed using the entire CORESET as an interleaving range and a given number of REGs as an interleaving unit. For example, in FIG. 3, permutation among groups of three REGs in the entire CORESET is performed.

As shown in FIG. 3, in a case of employing two-step interleaving, it is possible to reduce the probability of mapping PDCCHs for different user terminals in the same CCE (also referred to as a "blocking probability," a "collision probability," or the like) even when a plurality of CORESETs having different numbers of symbols at least partially overlap as shown in FIG. 1.

However, in the two-step interleaving shown in FIG. 3, the first step interleaving is performed in a REG unit, and hence the processing load of the radio base station and/or the user terminal may possibly increase. In view of this, the inventors of the present invention come up with the idea of, as one aspect, reducing a processing load related to two-step interleaving by changing the unit of the first step interleaving in FIG. 3 from REG to REG bundle, and at the same time reducing a blocking probability for PDCCHs.

In future radio communication systems (for example, 5G or NR), it is also assumed to support not only two-step interleaving but also one-step interleaving and non-interleaving. In view of this, the inventors of the present invention come up with the idea of, as one aspect, controlling a first step interleaving range (a first interleaving range, a value X to be described later) and/or a second step interleaving unit (a second interleaving unit, a value M to be described later) in two-step interleaving, to thereby easily support non-interleaving, one-step interleaving, and two-step interleaving.

The present embodiment will be described below in detail with reference to the drawings. Specifically, first and second steps in interleaving in the present embodiment will be described in detail.

Note that, although an interleaving range in the first step is indicated by using the given number X of REGs below, the interleaving range may be indicated by using the given number X of REG bundles. Although the unit of interleaving (interleaving unit) in the first step is indicated by using a given number of REG bundles, the interleaving unit may be indicated by using a given number of REGs or RBs. Although an interleaving unit in the second step is indicated by using a given number of RBs, the interleaving unit may be indicated by using a given number of REG bundles or REGs.

### (First Step)

In the first step, the first interleaving is performed with the given number X of REGs (resource units) as the first interleaving range and a REG bundle (a resource unit group) as a first interleaving unit. Note that the given number X of REGs may be a given number X of resource blocks (RBs) or a given number X of REGs that are contiguous in the frequency direction. Here, 1 RB = 1 REG.

X different REGs may be different from each other in pattern and/or matrix of the first interleaving (interleaving pattern/matrix).

The interleaving pattern/matrix may be determined based on at least one of a slot index, a start symbol index of the CORESET, a cell identifier (including a cell ID, a physical cell ID, and/or a virtual cell ID), an index for every X REGs, and a REG bundle index. For example, the interleaving pattern/matrix may be a function based on at least one of the above-described parameters. The interleaving pattern/matrix may be based on an LTE subblock interleaver.

Here, the value X may be an integral multiple of six, such as 6, 12, 24, or 36, or may be equal to the number of REGs constituting the entire CORESET. The value X may be determined by using first to third determination examples below.

### <First Determination Example>

In the first determination example, the value X may be configured for a user terminal by higher layer signaling (for example, a specific RRC parameter). For example, information indicating the value X, such as 6, 12, 24, 36, or the number of REGs constituting the entire CORESET, may be reported from the radio base station to the user terminal by higher layer signaling. For a CORESET configured by user-specific higher layer signaling (for example, RRC signaling), the value X can be configured by user-specific higher layer signaling. For a CORESET common to one or more user terminals can be configured by signaling of user-common broadcast information (for example, Master Information Block (MIB)) or system information (for example, System Information Block (SIB)), and/or Remaining Minimum System Information (RMSI).

In the first determination example, any value may be configured as X irrespective of the configuration (for example, at least one of the bandwidth, the number of RBs, and the number of symbols, and the like) of the CORESET.

The smaller the value X is configured, the more the blocking probability for PDCCHs can be reduced in the case where a plurality of CORESETs having different numbers of symbols are configured (refer to FIG. 1). In contrast, the greater the value X is, the greater frequency diversity effects can be obtained. In a case that the value X is configured to be equal to the number of REGs in the entire CORESET, a two-step interleaver can be used as a one-step interleaver.

### <Second Determination Example>

In the second determination example, the value X may be determined based on the configuration (for example, at least one of the bandwidth, the number of RBs, and the number of symbols, and the like) of the CORESET.

In the second determination example, the user terminal can implicitly derive the value X, based on the configuration of the CORESET, and hence it is possible to reduce overhead due to a report of the value X.

### <Third Determination Example>

In the third determination example, the value X may be statically determined to be a given value by a specification in advance. In the third determination example, any value may be statically determined as X irrespective of the configuration (for example, at least one of the bandwidth, the number of RBs, and the number of symbols, and the like) of the CORESET.

In the third determination example, the value X is statically determined to be a given value, and hence it is possible to reduce a processing load related to determination of the value X in the user terminal.

### (Second Step)

In the second step, the second interleaving is performed with the entire control resource set (CORESET) as the second interleaving range and a given number M of REGs (resource units) as a second interleaving unit. Note that the given number M of REGs may be the given number M of RBs or the given number M of REGs that are contiguous in the frequency direction. Here, 1 RB = 1 REG.

The interleaving patterns/matrices among different CORESETs may be the same or different. Note that using the same interleaving pattern/matrix among a plurality of CORESETs at least partially overlapping can avoid collision of REGs due to interleaving.

The interleaving pattern/matrix may be determined based on at least one of a slot index, a start symbol index of the CORESET, and a cell identifier (including a cell ID, a physical cell ID, and/or a virtual cell ID). For example, the interleaving pattern/matrix may be a function based on at least one of the above-described parameters. The interleaving pattern/matrix may be based on an LTE subblock interleaver.

Here, the value M may be an integral multiple of six, such as 6, 12, or 24. The value M may be determined by using first to third determination examples below.

### <First Determination Example>

In the first determination example, the value M may be configured for a user terminal by higher layer signaling (for example, a specific RRC parameter). For example, information indicating the value M, such as 6, 12, 24, or the number of REGs constituting the entire CORESET, may be reported from the radio base station to the user terminal by higher layer signaling. For a CORESET configured by user-specific higher layer signaling (for example, RRC signaling), the value M can be configured by user-specific higher layer signaling. For a CORESET common to one or more user terminals may be configured by signaling of user-common broadcast information (for example, MIB) or system information (for example, SIB and/or RMSI).

In the first determination example, any value may be configured as M irrespective of the configuration (for example, at least one of the bandwidth, the number of RBs, and the number of symbols, and the like) of the CORESET.

A case in which the value X is configured to be equal to the number of REGs in one REG bundle and the value M is configured to be equal to the number of REGs in the entire CORESET corresponds to a case of not employing interleaving. This is because the first step interleaving unit is one REG bundle, and thus the first step interleaving is not performed in a case that X indicating the first step interleaving range is one REG bundle. Further, the above is because the second step interleaving range is the entire CORESET, and thus the second step interleaving is not performed either in a case that M indicating the interleaving unit is equal to the number of REGs in the entire CORESET.

### <Second Determination Example>

In the second determination example, the value M may be determined based on the configuration (for example, at least one of the bandwidth, the number of RBs, and the number of symbols, and the like) of the CORESET.

In the second determination example, the user terminal can implicitly derive the value M, based on the configuration of the CORESET, and hence it is possible to reduce overhead due to a report of the value M.

### <Third Determination Example>

In the third determination example, the value M may be statically determined to be a given value by a specification in advance. In the third determination example, any value may be statically determined as M irrespective of the configuration (for example, at least one of the bandwidth, the number of RBs, and the number of symbols, and the like) of the CORESET.

In the third determination example, the value M is statically determined to be a given value, and hence it is possible to reduce a processing load related to determination of the value M in the user terminal.

According to two-step interleaving configured as described above, since the first step interleaving unit is REG bundle, it is possible to reduce the processing load in comparison with that in two-step interleaving shown in FIG. 3. By appropriately determining the values X and/or Y, it is possible to flexibly perform control for a case of not performing interleaving, a case of employing one-step interleaving, and a case of employing two-step interleaving.

### (Concrete Example)

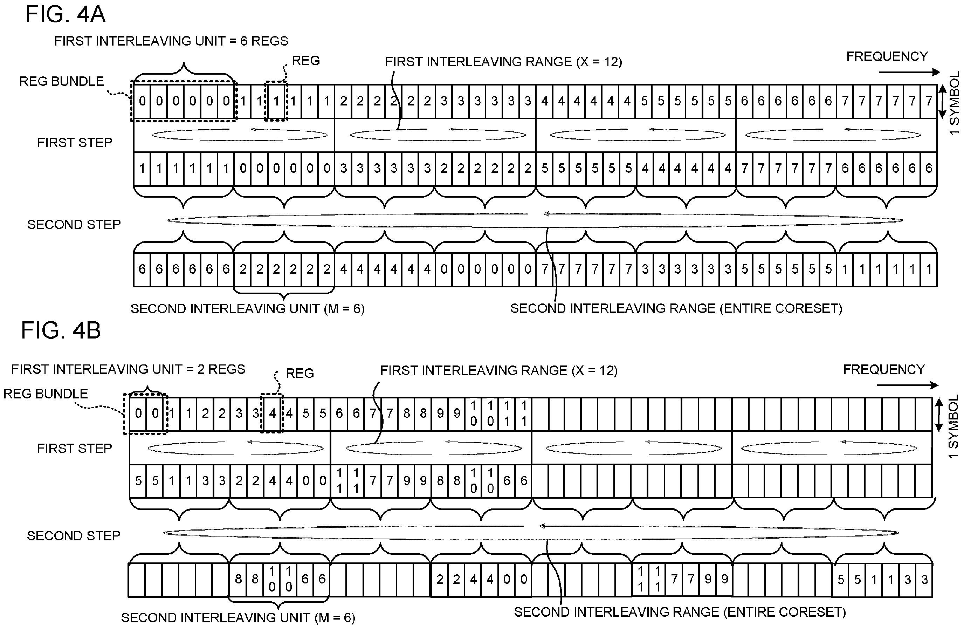

Concrete examples of the above-described two-step interleaving will be described with reference to FIGS. 4A, 4B, 5 and 6. As an example, FIGS. 4A, 4B, 5, and 6 show an example in which the first interleaving range (that is, the value X) is 12 RBs (12 REGs in the frequency direction), the first interleaving unit is one REG bundle, the second interleaving range is the entire CORESE set, and the second interleaving unit (that is, the value M) is six RBs (six REGs in the frequency direction), but the configuration is not limited thereto. In addition, the interleaving patterns/matrices are not limited to the shown ones.

### <1-Symbol CORESET>

FIGS. 4A and 4B are each a diagram to show an example of a two-step interleaving in a 1-symbol CORESET. In FIGS. 4A and 4B, the number given to each REG indicates an index of a corresponding REG bundle (REG bundle index).

FIG. 4A shows a case in which one REG bundle is constituted of six REGs that are contiguous in the frequency direction. In the first step in FIG. 4A, permutation is performed between two REG bundles in each 12 REGs. For example, in the first step, six REGs in REG bundle index #0 and six REGs in REG bundle index #1 are permutated to be reversed in order. Similarly, permutation is performed between REG bundle indices #2 and #3, #4 and #5, and #6 and #7, in corresponding 12 REGs.

In the second step in FIG. 4A, permutation is performed in a unit of six RBs (= 6 REGs) in the entire CORESET. For example, in the second step, the REG bundle having REG bundle index #1 is permutated from one frequency domain to the other frequency domain in the CORESET. Similarly, the REG bundle having each of REG bundle indices #2 to #7 is permutated in the CORESET.

FIG. 4B shows a case in which one REG bundle is constituted of two REGs that are contiguous in the frequency direction. In the first step in FIG. 4B, permutation is performed among six REG bundles in each 12 REGs. In the second step in FIG. 4B, permutation is performed in a unit of six RBs (= 6 REGs) in the entire CORESET.

Note that two-step interleaving is also employed for REGs to which no REG bundle indices are illustrated in FIG. 4B, as for the REGs to which REG bundle indices #0 to #11 are illustrated.

### <2-Symbol CORESET>

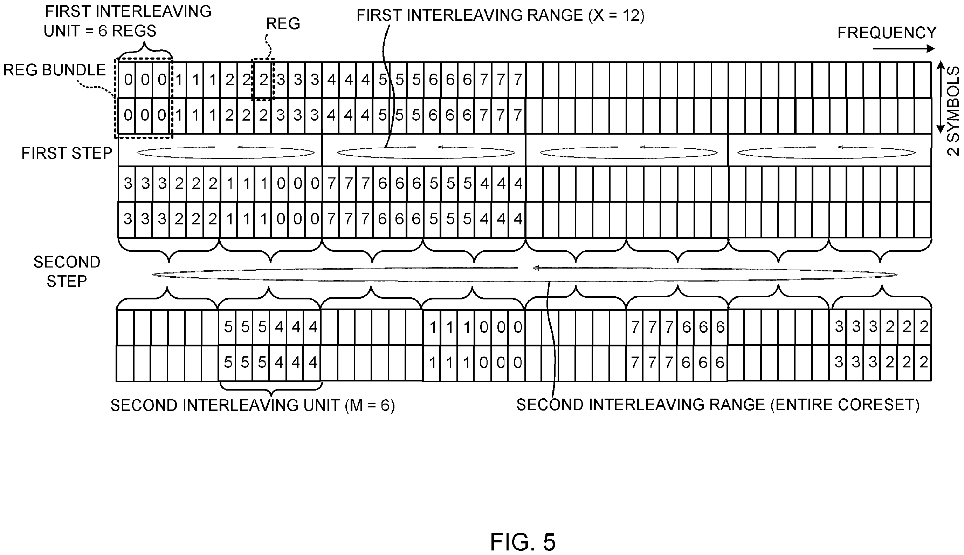

FIG. 5 is a diagram to show an example of two-step interleaving in a 2-symbol CORESET. In FIG. 5, one REG bundle is constituted of six REGs in total corresponding to two REGs that are contiguous in the time direction and three REGs that are contiguous in the frequency direction. In the following, differences from FIGS. 4A and 4B will be mainly described.

In the first step in FIG. 5, permutation is performed among four REG bundles in 12 RBs (12 REGs in the frequency direction). For example, in the first step, four REG bundles having REG bundle indices #0 to #3 are permutated. Similarly, four REG bundles having REG bundle indices #4 to #7 are permutated. This similarly applies to the REGs to which no REG bundle indices are illustrated.

In the second step in FIG. 5, permutation is performed in a unit of six RBs (= 6 REGs in the frequency direction) in the entire CORESET. For example, in the second step, the two REG bundles having REG bundle indices #3 and #2 are permutated from one frequency domain to the other frequency domain in the CORESET. Similarly, each two REG bundles having REG bundle indices #1 and #0, #7 and #6, or #5 and #4 are also permutated in the CORESET. This similarly applies to each two REG bundles to which no REG bundle indices are illustrated.

Note that, although not shown, one REG bundle may be constituted of two REGs that are contiguous in the time direction in a case that a 2-symbol CORESET is configured. In this case, in the first step, permutation is performed among 12 REG bundles in 12 RBs (12 REGs in the frequency direction). In the second step, permutation similar to that in FIG. 5 is performed.

### <3-Symbol CORESET>

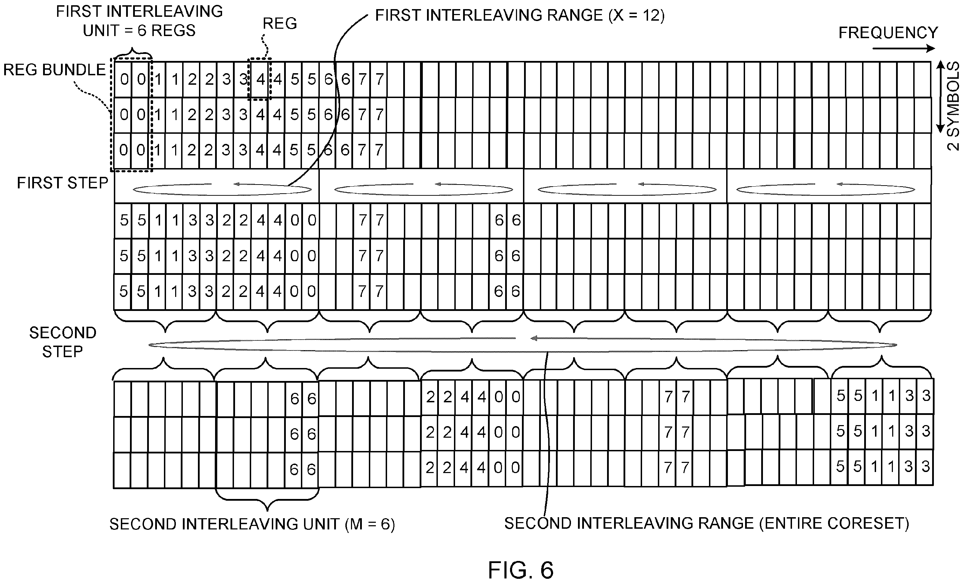

FIG. 6 is a diagram to show an example of two-step interleaving in a 3-symbol CORESET. In FIG. 6, one REG bundle is constituted of six REGs in total corresponding to three REGs that are contiguous in the time direction and two REGs that are contiguous in the frequency direction. In the following, differences from FIGS. 4A, 4B, and 5 will be mainly described.

In the first step in FIG. 6, permutation is performed among six REG bundles in 12 RBs (12 REGs in the frequency direction). For example, in the first step, six REG bundles having REG bundle indices #0 to #5 are permutated. This similarly applies to the two REG bundles having REG bundle indices #6 and #7 and the REG bundles to which no REG bundle indices are illustrated.

In the second step in FIG. 6, permutation is performed in a unit of six RBs (= 6 REGs in the frequency direction) in the entire CORESET. For example, in the second step, the three REG bundle having REG bundle indices #5, #1, and #3 are permutated from one frequency domain to the other frequency domain in the CORESET. Similarly, three REG bundles having REG bundle indices #2, #4, and #0 are also permutated in the CORESET. This similarly applies to the three REG bundles including REG bundle index #4, the three REG bundles including REG bundle index #7, and each three REG bundles to which no REG bundle indices are illustrated.

Note that, although not shown, one REG bundle may be constituted of three REGs that are contiguous in the time direction in a case that a 3-symbol CORESET is configured. In this case, in the first step, permutation is performed among 12 REG bundles in 12 RBs (12 REGs in the frequency direction). In the second step, permutation similar to that in FIG. 6 is performed.

According to two-step interleaving as described above, since the first step interleaving is performed in a unit of RB bundle as shown in FIGS. 4A, 4B, 5, and 6, the blocking probability for PDCCHs can be reduced without causing any processing load even when interleaving is employed in a case that a plurality of CORESETs having different numbers of symbols are configured. Moreover, since interleaving in the frequency direction is performed while interleaving in the time direction is not performed, interleaving can be appropriately performed even in a case that a plurality of CORESETs having different numbers of symbols are configured.

In FIGS. 4A, 4B, 5, and 6, in a case that the first interleaving range (the value X) is configured in the entire CORESET, a two-step interleaver can be caused to operate as a one-step interleaver.

In FIGS. 4A, 4B, 5, and 6, by configuring the first interleaving range (the value X) to be equal to the size of each REG bundle in the frequency direction (for example, six in FIG. 4A, two in FIG. 4B, three in FIG. 5, and two in FIG. 6), to use the first interleaving range (the value X) as the second interleaving unit (the value M), the first step can be omitted. By configuring the second interleaving unit (the value M) to be the entire CORESET, the second step can be omitted. In other words, non-interleaving can be employed.

In this way, according to the present embodiment, by appropriately determining the values X and/or Y, it is possible to flexibly perform control for a case of not performing interleaving, a case of employing one-step interleaving, and a case of employing two-step interleaving.

### (Radio Communication System)

Hereinafter, a structure of a radio communication system according to the present embodiment will be described. In this radio communication system, the radio communication method according to each aspect of the present invention described above may be used alone or may be used in combination for communication.

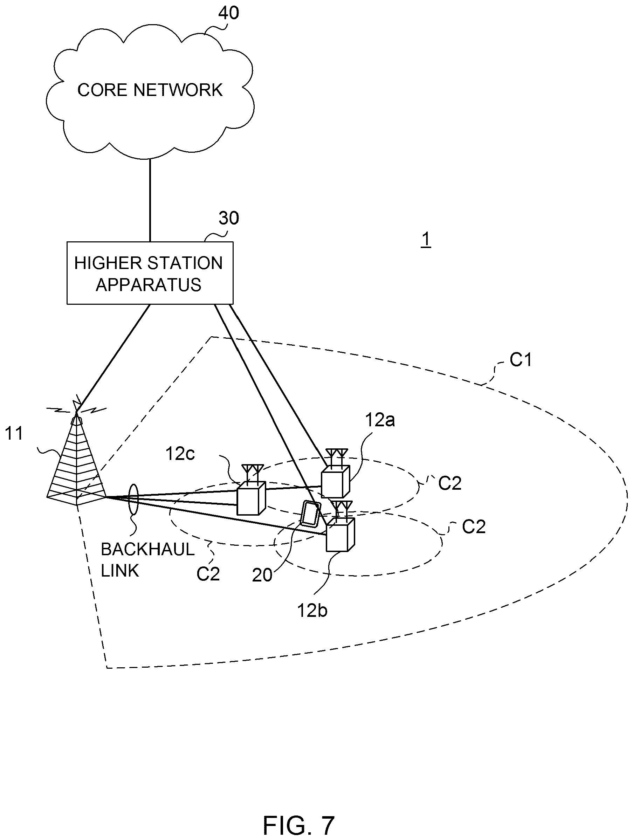

FIG. 7 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "Future Radio Access (FRA)," "New-RAT (Radio Access Technology)," "New Radio (NR)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement of each cell and user terminal 20 is by no means limited to that shown in the diagram.

The user terminals 20 can connect with both the radio base station 11 and the radio base stations 12. It is assumed that the user terminals 20 use the macro cell C1 and the small cells C2 at the same time by CA or DC. The user terminals 20 may adopt CA or DC by using a plurality of cells (CCs) (for example, five or less CCs, or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The radio base station 11 and each of the radio base stations 12 (or between two radio base stations 12) may have a configuration with a wired connection (for example, means in compliance with the Common Public Radio Interface (CPRI) such as an optical fiber, an X2 interface, and so on) or a wireless connection.

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. The radio base stations 12 are radio base stations having local coverages, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

The radio communication system 1 may have a configuration of using different numerologies in a cell and/or among cells. Note that a numerology means, for example, a communication parameter (for example, a subcarrier spacing, a bandwidth, or the like) used for transmission/reception of a signal.

In the radio communication system 1, a downlink shared channel (Physical Downlink Shared Channel (PDSCH), which is used by each user terminal 20 on a shared basis, a broadcast channel (Physical Broadcast Channel (PBCH)), downlink L1/L2 control channels and so on, are used as downlink channels. User data, higher layer control information, System Information Blocks (SIBs), and so on are communicated on the PDSCH. The Master Information Blocks (MIBs) are communicated on the PBCH.

The downlink L1/L2 control channels include a Physical Downlink Control Channel (PDCCH), an Enhanced Physical Downlink Control Channel (EPDCCH), a Physical Control Format Indicator Channel (PCFICH), a Physical Hybrid-ARQ Indicator Channel (PHICH) and so on. Downlink control information (DCI), including PDSCH and PUSCH scheduling information, and so on are communicated on the PDCCH. The number of OFDM symbols to be used for the PDCCH is communicated on the PCFICH. Transmission confirmation information (for example, also referred to as "retransmission control information," "HARQ-ACK," "ACK/NACK," and so on) of Hybrid Automatic Repeat reQuest (HARQ) for a PUSCH is communicated on the PHICH. The EPDCCH is frequency-division multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on are used as uplink channels. User data, higher layer control information, and so on are communicated on the PUSCH. In addition, radio quality information (Channel Quality Indicator (CQI)) of the downlink, transmission confirmation information, and so on are communicated on the PUCCH. Random access preambles for establishing connections with cells are communicated on the PRACH.

In the radio communication system 1, a cell-specific reference signal (CRS), a channel state information-reference signal (CSI-RS), a demodulation reference signal (DMRS), a positioning reference signal (PRS), and so on are communicated as downlink reference signals. In the radio communication system 1, a measurement reference signal (Sounding Reference Signal (SRS)), a demodulation reference signal (DMRS), and so on are communicated as uplink reference signals. Note that DMRS may be referred to as a "user terminal specific reference signal (UE-specific Reference Signal)." Communicated reference signals are by no means limited to these.

### (Radio Base Station)

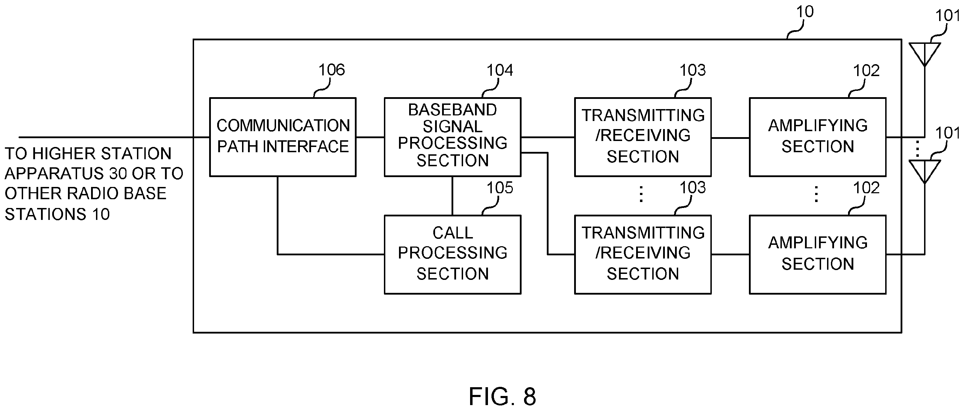

FIG. 8 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a Packet Data Convergence Protocol (PDCP) layer process, division and coupling of the user data, Radio Link Control (RLC) layer transmission processes such as RLC retransmission control, Medium Access Control (MAC) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources, and so on.

The transmission line interface 106 transmits and/or receives signals to and/or from the higher station apparatus 30 via a given interface. The transmission line interface 106 may transmit and/or receive signals (backhaul signaling) with other radio base stations 10 via an inter-base station interface (for example, an optical fiber in compliance with the Common Public Radio Interface (CPRI) and an X2 interface).

The transmitting/receiving sections 103 transmit downlink control channels by using resource unit groups (REG bundles) each including one or more resource units (REGs) in a control resource set (CORESET).

The transmitting/receiving sections 103 may transmit at least one of information indicating a given number of resource units (the value X) to serve as the first interleaving range, information indicating a given number of resource units (the value M) to serve as the second interleaving unit, and information related to a configuration of a control resource set (CORESET).

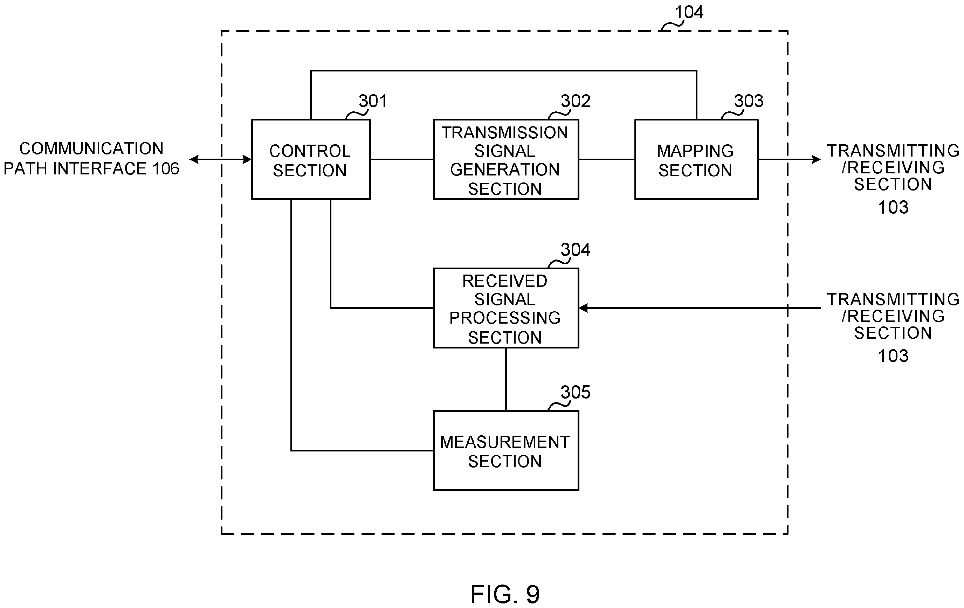

FIG. 9 is a diagram to show an example of a functional structure of the radio base station according to the present embodiment. Note that the present example primarily shows functional blocks that pertain to characteristic parts of the present embodiment, and it is assumed that the radio base station 10 also include other functional blocks that are necessary for radio communication.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals by the transmission signal generation section 302, the mapping of signals by the mapping section 303, and so on. The control section 301 controls the signal receiving processes by the received signal processing section 304, the measurements of signals by the measurement section 305, and so on.

The control section 301 controls the scheduling (for example, resource assignment) of system information, a downlink data signal (for example, a signal communicated on the PDSCH), and a downlink control signal (for example, a signal transmitted on the PDCCH, the EPDCCH, or the NR-PDCCH). Based on the results of determining whether or not retransmission control to the uplink data signal is necessary, or the like, the control section 301 controls generation of a downlink control signal (for example, transmission confirmation information or the like), a downlink data signal, and so on.

The control section 301 controls a configuration of each control resource set (CORESET). The control section 301 also controls mapping of a downlink control channel (for example, non-interleaving, one-step interleaving, or two-step interleaving) in each CORESET.

Specifically, the control section 301 may control first interleaving in which the given number X of resource units (REGs) are configured as the first interleaving range and a resource unit group (REG bundle) is configured as the first interleaving unit, and second interleaving in which the entire of the control resource set (CORESET) is configured as the second interleaving range and the given number M of resource units are configured as the second interleaving unit.

The control section 301 may determine the given number X of resource units to serve as the first interleaving range, based on higher layer signaling or the configuration of the control resource set, or may statically determine the given number X of resource units to be a given value.

The control section 301 may determine the first interleaving pattern and/or matrix, based on at least one of a slot index, a start symbol index of the control resource set, a cell identifier, and an index of the resource unit group.

The control section 301 may determine the given number M of resource units to serve as the second interleaving unit, based on higher layer signaling or the configuration of the control resource set, or may statically determine the given number M of resource units to be a given value.

The control section 301 may determine the second interleaving pattern and/or matrix, based on at least one of a slot index, a start symbol index of the control resource set, and a cell identifier.

The transmission signal generation section 302 generates downlink signals (downlink control signals, downlink data signals, downlink reference signals, and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of a downlink signal and UL grant to report assignment information of an uplink signal, based on commands from the control section 301. For a downlink data signal, an encoding process and a modulation process are performed in accordance with a coding rate, modulation scheme, or the like determined based on channel state information (CSI) from each user terminal 20.

The mapping section 303 maps the downlink signals generated in the transmission signal generation section 302 to the above-described given radio resources, based on commands from the control section 301, and outputs the downlink signals to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding, and so on) of received signals that are input from the transmitting/receiving sections 103. Here, the received signals are, for example, uplink signals that are transmitted from the user terminals 20 (uplink control signals, uplink data signals, uplink reference signals, and so on). The received signal processing section 304 can be constituted with a signal processor, a signal processing circuit or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

The measurement section 305 may measure, for example, a received power (for example, Reference Signal Received Power (RSRP)) of a received signal, a received quality (for example, Reference Signal Received Quality (RSRQ), an Signal to Interference plus Noise Ratio (SINR), uplink channel information (for example, CSI), and so on. The measurement results may be output to the control section 301.

### (User Terminal)

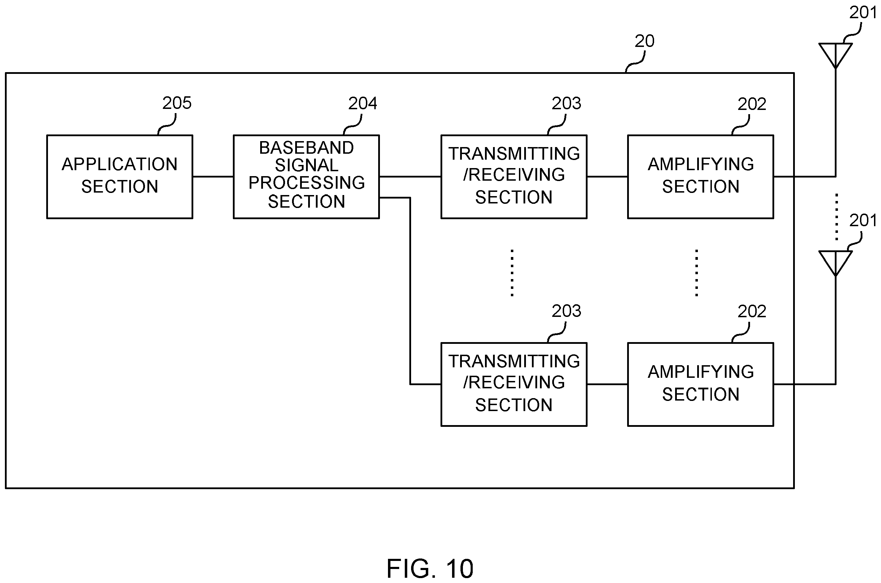

FIG. 10 is a diagram to show an example of an overall structure of a user terminal according to the present embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits, or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive downlink control channels by using resource unit groups (REG bundles) each including one or more resource units (REGs) in a control resource set (CORESET).

The transmitting/receiving sections 203 may receive at least one of information indicating a given number of resource units (the value X) to serve as the first interleaving range, information indicating a given number of resource units (the value M) to serve as the second interleaving unit, and information related to a configuration of a control resource set (CORESET).

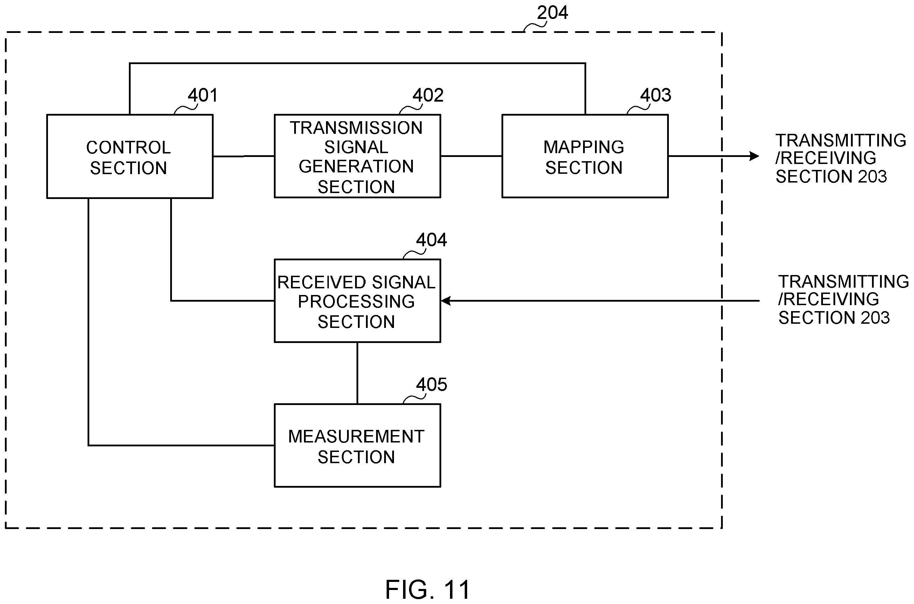

FIG. 11 is a diagram to show an example of a functional structure of a user terminal according to the present embodiment. Note that the present example primarily shows functional blocks that pertain to characteristic parts of the present embodiment, and it is assumed that the user terminal 20 also includes other functional blocks that are necessary for radio communication.

The baseband signal processing section 204 provided in the user terminal 20 at least includes a control section 401, a transmission signal generation section 402, a mapping section 403, a received signal processing section 404, and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit, or control apparatus that can be described based on general understanding of the technical field to which the present invention pertains.

The control section 401, for example, controls the generation of signals by the transmission signal generation section 402, the mapping of signals by the mapping section 403, and so on. The control section 401 controls the signal receiving processes by the received signal processing section 404, the measurements of signals by the measurement section 405, and so on.

The control section 401 acquires a downlink control signal transmitted from the radio base station 10 (for example, a signal transmitted on the NR-PDCCH) and a downlink data signal (for example, a signal transmitted on the PDSCH), from the received signal processing section 404. The control section 401 controls generation of an uplink control signal (for example, transmission confirmation information or the like) and/or an uplink data signal, based on the results of determining whether or not retransmission control for a downlink control signal and/or a downlink data signal is necessary.

The control section 401 controls a configuration of each control resource set (CORESET), based on configuration information from the radio base station. The control section 401 controls monitoring (blind decoding) of at least part of each configured CORESET (search space).

The control section 401 also controls demapping of a downlink control channel (for example, non-interleaving, one-step interleaving, or two-step interleaving) in each CORESET.

Specifically, the control section 401 may control first interleaving in which the given number X of resource units (REGs) are configured as the first interleaving range and a resource unit group (REG bundle) is configured as the first interleaving unit, and second interleaving in which the entire of the control resource set (CORESET) is configured as the second interleaving range and the given number M of resource units are configured as the second interleaving unit.

The control section 401 may determine the given number X of resource units to serve as the first interleaving range, based on higher layer signaling or the configuration of the control resource set, or may statically determine the given number X of resource units to be a given value.

The control section 401 may determine the first interleaving pattern and/or matrix, based on at least one of a slot index, a start symbol index of the control resource set, a cell identifier, and an index of the resource unit group.

The control section 401 may determine the given number M of resource units to serve as the second interleaving unit, based on higher layer signaling or the configuration of the control resource set, or may statically determine the given number M of resource units to be a given value.

The control section 401 may determine the second interleaving pattern and/or matrix, based on at least one of a slot index, a start symbol index of the control resource set, and a cell identifier.

The transmission signal generation section 402 generates uplink signals (uplink control signals, uplink data signals, uplink reference signals, and so on) based on commands from the control section 401, and outputs the uplink signals to the mapping section 403. The transmission signal generation section 402 can be constituted with a signal generator, a signal generation circuit, or signal generation apparatus that can be described based on general understanding of the technical field to which the present invention pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit, or mapping apparatus that can be described based on general understanding of the technical field to which the present invention pertains.

The received signal processing section 404 performs receiving processes (for example, demapping, demodulation, decoding, and so on) of received signals that are input from the transmitting/receiving sections 203. Here, the received signals are, for example, downlink signals transmitted from the radio base station 10 (downlink control signals, downlink data signals, downlink reference signals, and so on). The received signal processing section 404 can be constituted with a signal processor, a signal processing circuit, or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI, and so on, to the control section 401. The received signal processing section 404 outputs the received signals and/or the signals after the receiving processes to the measurement section 405.

The measurement section 405 performs measurements with respect to the received signals. For example, the measurement section 405 performs measurement by using a downlink reference signal transmitted from the radio base station 10. The measurement section 405 can be constituted with a measurer, a measurement circuit or measurement apparatus that can be described based on general understanding of the technical field to which the present invention pertains.

The measurement section 405 may measure, for example, a received power (for example, RSRP) of a received signal, a received quality (for example, RSRQ or received SINR), and downlink channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. The means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) by these plurality of pieces of apparatus.

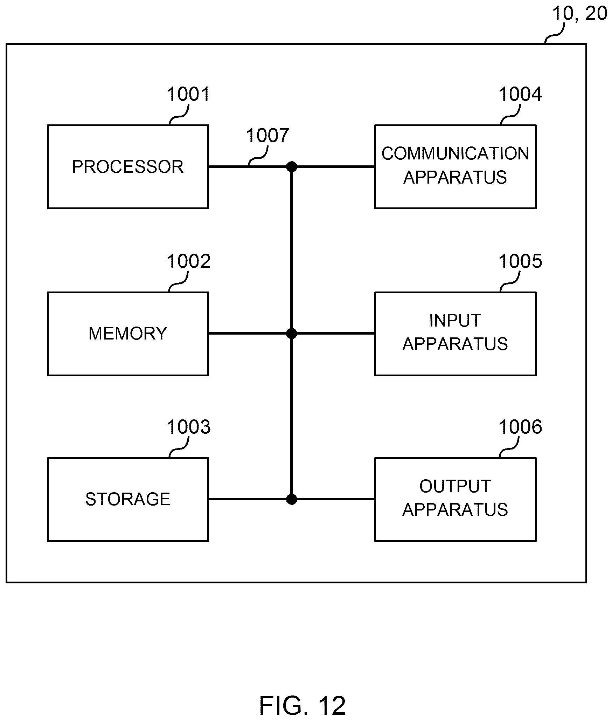

For example, a radio base station, a user terminal, and so on according to the present embodiment may function as a computer that executes the processes of the radio communication method of the present invention. FIG. 12 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication by the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to the present embodiment.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by the bus 1007 for communicating information. The bus 1007 may be formed with a single bus, or may be formed with different buses for pieces of apparatus.

Also, the radio base station 10 and the user terminals 20 may be structured to include hardware such as a microprocessor, a digital signal processor (DSP), an Application Specific Integrated Circuit (ASIC), a Programmable Logic Device (PLD), an Field Programmable Gate Array (FPGA), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (Physical RB (PRB))," a "sub-carrier group (SCG)," a "resource element group (REG),"a "PRB pair," an "RB pair," and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to given values, or may be represented in another corresponding information. For example, radio resources may be specified by given indices. Furthermore, mathematical expressions that use these parameters, and so on may be different from those expressly disclosed in this specification.

The names used for parameters and so on in this specification are in no respect limiting. For example, since various channels (Physical Uplink Control Channel (PUCCH), Physical Downlink Control Channel (PDCCH), and so on) and information elements can be identified by any suitable names, the various names allocated to these various channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed in a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and may be performed in other methods. For example, reporting of information may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. MAC signaling may be reported using, for example, MAC control elements (MAC CEs) .

Reporting of given information (for example, reporting of "X holds") does not necessarily have to be performed explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In this specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of a base station and/or a base station subsystem that provides communication services within this coverage.

In this specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (Device-to-Device (D2D)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Specific actions which have been described in this specification to be performed by a base station may, in some cases, be performed by upper nodes. In a network constituted of one or a plurality of network nodes with base stations, it is clear that various operations that are performed to communicate with terminals can be performed by base stations, one or more network nodes (for example, Mobility Management Entities (MMEs), Serving-Gateways (S-GW), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access." In the case of being used in this specification, two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, and/or (both visible and invisible) optical regions.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a receiving section that receives a downlink control channel transmitted by using a resource unit group including one or more resource units in a control resource set; and
a control section that controls first interleaving using a given number of resource units as a first interleaving range and the resource unit group as a first interleaving unit, and second interleaving using the entire of the control resource set as a second interleaving range and a given number of resource units as a second interleaving unit.

2. The user terminal according to claim 1, wherein
the given number of resource units to serve as the first interleaving range is configured by higher layer signaling, determined based on a configuration of the control resource set, or statically determined to be a given value

3. The user terminal according to claim 1 or 2, wherein
the control section determines a pattern and/or matrix of the first interleaving, based on at least one of a slot index, a start symbol index of the control resource set, a cell identifier, and an index of the resource unit group

4. The user terminal according to any one of claims 1 to 3, wherein
the given number of resource units to serve as the second interleaving unit is configured by higher layer signaling, determined based on a configuration of the control resource set, or statically determined to be a given value

5. The user terminal according to any one of claims 1 to 4, wherein the control section determines a pattern and/or matrix of the second interleaving, based on at least one of a slot index, a start symbol index of the control resource set, and a cell identifier

6. A radio communication method comprising:
in a user terminal,
receiving a downlink control channel transmitted by using a resource unit group including one or more resource units in a control resource set; and
controlling first interleaving using a given number of resource units as a first interleaving range and the resource unit group as a first interleaving unit, and second interleaving using the entire of the control resource set as a second interleaving range and a given number of resource units as a second interleaving unit.
